# EUROPÄISCHE PATENTSCHRIFT

(11) **EP 3 247 209 B1**
(45) Veröffentlichungstag und Bekanntmachung des Hinweises auf die Patenterteilung: **07.04.2021**
(21) Anmeldenummer: 15816377.4
(22) Anmeldetag: 01.12.2015
(51) Int. Cl.: A01N 25/04, A01N 25/10, A01N 25/12, A01N 59/16, C10L 1/14, A01P 1/00

(54) **MITTEL ZUR VERMEIDUNG UND/ODER VERNICHTUNG VON MIKROBIELLEM BEWUCHS IN EINEM LAGER FÜR EINEN FLÜSSIGEN KOHLENWASSERSTOFF, VERFAHREN ZUR VERMEIDUNG UND/ODER VERNICHTUNG VON MIKROBIELLEM BEWUCHS IN EINEM LAGER FÜR EINEN FLÜSSIGEN KOHLENWASSERSTOFF**
AGENT FOR AVOIDING AND/OR DESTROYING MICROBIAL GROWTH IN A STORE FOR A LIQUID HYDROCARBON, METHOD FOR AVOIDING AND/OR DESTROYING MICROBIAL GROWTH IN A STORE FOR A LIQUID HYDROCARBON
MILIEU PERMETTANT DE PRÉVENIR ET/OU D'ÉLIMINER UNE COUVERTURE MICROBIENNE DANS UN LIEU DE STOCKAGE POUR UN HYDROCARBURE LIQUIDE, PROCÉDÉ PERMETTANT DE PRÉVENIR ET/OU D'ÉLIMINER UNE COUVERTURE MICROBIENNE DANS UN LIEU DE STOCKAGE POUR UN HYDROCARBURE LIQUIDE

(30) Priorität: 20.01.2015 DE 102015100756
(43) Veröffentlichungstag der Anmeldung: 29.11.2017
(73) Patentinhaber: FAUDI Aviation GmbH, 35260 Stadtallendorf (DE)
(72) Erfinder: WILDSCHÜTZ, Marcus, 41469 Neuss (DE)
(74) Vertreter: Patentanwälte Olbricht Buchhold Keulertz
(86) Internationale Anmeldenummer: PCT/EP2015/078124
(87) Internationale Veröffentlichungsnummer: WO 2016/116199

(56) Entgegenhaltungen:
- EP-A1- 0 771 525
- WO-A1-2014/154946
- CN-A- 102 391 597
- DE-A1-102004 053 645
- DE-A1-102008 063 023
- DE-A1-102012 006 858
- DE-B- 1 275 955
- JP-A- 2002 275 654
- US-A- 2 907 717
- US-A- 3 291 580
- US-A- 3 467 349
- US-A- 3 502 509
- US-A- 3 869 388
- US-B1- 6 432 169
- Tim A Rivard: "Sludge Contamination in Marine Diesel Fuel", Fuel technology , 1. Januar 2013 (2013-01-01), 2013, XP055244634, Gefunden im Internet: URL:http://www.fuelright.ca/fuel right/PDF Files/BCSN-Dec-Pg47-49.pdf [gefunden am 2016-01-26]
- FÁTIMA M. BENTO ET AL: "Biodeterioration of stored diesel oil: studies in Brazil", INTERNATIONAL BIODETERIORATION & BIODEGRADATION, Bd. 47, Nr. 2, 1. März 2001 (2001-03-01), Seiten 107-112, XP055046282, ISSN: 0964-8305, DOI: 10.1016/S0964-8305(00)00112-8
- WOJCIECH DZIEGIELEWSKI ET AL: "Discussion on microbial contamination of naval fuels", POLISH MARITIME RESEARCH, Bd. 16, Nr. 3, 1. Januar 2009 (2009-01-01) , XP055244489, ISSN: 1233-2585, DOI: 10.2478/v10012-008-0032-6
- BASF aerospace materials: "Kerojet aquarius water scavenger aditive", , 1. Januar 2013 (2013-01-01), XP055244640, Gefunden im Internet: URL:http://www.aerospace.basf.com/common/p dfs/BASF_Kerojet_Aquarious_DS_USL_sfs.pdf [gefunden am 2016-01-26]
- MICHELE BIRMELE ET AL: "Disinfection of Spacecraft Potable Water Systems by Passivation with Ionic Silver", RESEARCH DISCLOSURE, MASON PUBLICATIONS, HAMPSHIRE, GB, Bd. 570, Nr. 36, 1. Oktober 2011 (2011-10-01), Seite 1175, XP007140870, ISSN: 0374-4353
- "Dieselpest-was tun?", 2009
- MOMOH. A. O. ET AL.: "Evaluationof the antimicrobial and phytochemical properties of oil from castor seeds (Ricinus communis Linn)", BULL. ENVIRON. PHARMACOL. LIFE SCI., vol. 1, no. 10, 2012,

## Beschreibung

Die Erfindung betrifft ein Mittel zur Vermeidung und/oder Vernichtung von mikrobiellem Bewuchs in einem Lager für einen flüssigen Kohlenwasserstoff gemäß dem Oberbegriff von Anspruch 1 sowie ein Verfahren zur Vermeidung und/oder Vernichtung von mikrobiellem Bewuchs in einem Lager für einen flüssigen Kohlenwasserstoff gemäß dem Oberbegriff von Anspruch 7.

In Lagern für flüssige Kohlenwasserstoffe, d. h. in stationären und mobilen Lagerbehältnissen für flüssige Kohlenwasserstoffe, sind in der Regel Mikroorgansimen bzw. Mikroben vorhanden, wie z. B. Bakterien, Hefen, Algen und Pilze, deren Größe auch außerhalb des Mikrometerbereichs liegen kann. Dies betrifft insbesondere die im Raffinerie-, Schifffahrt-, Luftfahrt- und KFZ-Bereich verwendeten Brenn-, Kraft- und Treibstoffe, wie z. B. Diesel, Biodiesel, Heizöl, Benzin, Kerosin, Biokerosin und Naphta.

Im Folgenden werden die Ausdrücke "Lager für einen flüssigen Kohlenwasserstoff" und "Kohlenwasserstofflager" synonym verwendet.

Die Anzahl der Mikroorganismen nimmt während der Lagerung stetig zu. Dabei fungieren die Kohlenwasserstoffe als Substrate bzw. Nahrung für die Mikroorganismen. Insbesondere in Biodiesel sind gut biologisch abbaubare Komponenten enthalten. Der maßgebliche Faktor für die stete, unerwünschte Vermehrung der Mikroorganismen stellt das unvermeidbar vorhandene Wasser bzw. die Wasserkonzentration im flüssigen Kohlenwasserstoff, z. B. einem Brenn-, Kraft- oder Treibstoff, dar. In der Regel setzt sich das Wasser mit der Zeit unten im Kohlenwasserstofflager, d. h. beispielsweise in einem Brenn-, Kraft- oder Treibstofflager, ab und steht den Mikroorganismen dort als Lebensraum zur Verfügung. Die Kontamination mit Wasser - und infolgedessen mit Mikroorganismen - kann innerhalb der gesamten Lieferkette von Raffinerie über Zwischenlager bis hin zum Fahrzeug- oder Heizöltank auftreten, z. B. beim Befüllen oder Belüften des Lagers oder des Tanks oder durch etwaige Verschmutzungen.

Aufgrund des durch die Mikroorganismen verursachten Biomassezuwachses kommt es zu diversen Problemen. Zu den häufigsten Schäden zählen Filter- und Separationsprobleme, insbesondere das Verstopfen von Filtern und damit einhergehende Maschinenausfälle, Motorkorrosion, Lagerschäden, Schäden an Einspritzpumpen und -düsen bis hin zu deren Ausfall, geborstene Metallteile, angefressene Turbinenschlaufen und allgemeine Korrosionserscheinungen.

Die durch die Mikroorganismen verursachte mikrobielle Korrosion von Dieseltanks und die damit einhergehenden Funktionsstörungen von Dieselmotoren wird als "Dieselpest" bezeichnet. Im Folgenden wird der Begriff "Dieselpest" unabhängig davon verwendet, welcher Brenn-, Kraft- oder Treibstoff gemeint ist. "Dieselpest" tritt bevorzugt in Tanks selten genutzter Fahrzeuge auf. Auch Ölheizungen in selten beheizten Häusern sind regelmäßig betroffen.

Um den vorgenannten Problemen zu begegnen, sind im Stand der Technik einige Methoden bekannt, welche jedoch - wenn überhaupt - nur zu einer kurzfristigen Lösung führen.

Bei akutem Mikroorganismenbefall des in einem Tank oder Lager befindlichen Brenn-, Kraft- oder Treibstoffs werden beispielsweise Breitbandbiozide eingesetzt, mit denen eine Vielzahl verschiedener Mikroorganismen vernichtet werden soll. Zum anderen wird von einer ungiftigen Enzymtechnologie Gebrauch gemacht, mit welcher vorhandene Mikroorganismen eliminiert werden sollen und zudem deren Vermehrung verhindert werden soll. Zur Durchführung der beiden vorgenannten Methoden sind häufig Dosierungssysteme vorgesehen, welche kostenintensiv in der Anschaffung und Wartung sind. Sofern die beiden erstgenannten Methoden überhaupt zu einem kurzfristigen Erfolg führen, ist üblicherweise der Einsatz großer Mengen an Biozid oder Enzymen erforderlich, was unter ökonomischen und ökologischen Gesichtspunkten ungünstig ist.

Aus WO 2014/154946 A1 ist eine Biozidzusammensetzung bekannt, welche eine Mizelle mit einem Blockcoploymer und einem Stoff zur Stabilisierung von quartärem Ammonium aufweist, wobei das Blockcopolymer einen biozidlöslichen Teil und einen wasserlöslichen Teil aufweist.

US3502509 (mit Teflon™ beschichtete Silberpartikel), CN102391597 (mit Teflon™ beschichtete Kupferpartikel) und JP2002275654 (mit polyfluoriertem Alkylsulfid beschichtete Silberpartikel) offenbaren ein Mittel, wobei das Mittel ein antihaftendes Material aufweist, und wobei das Mittel ein Biozid aufweist, dadurch gekennzeichnet, dass das Biozid mindestens einen Wirkstoff umfasst, der eine Ummantelung aufweist, aber diese Dokumente offenbaren nicht, dass die Ummantelung eine Wasserlöslichkeit hat, die höher als die Wasserlöslichkeit des mindestens einen Wirkstoffs ist.

Die vorgenannten Methoden sind jedoch - wenn überhaupt - in der Regel nur kurzfristig wirksam. Es wird keine dauerhafte Lösung des Problems der mikrobiellen Belastung des Brenn-, Kraft- oder Treibstoffs, d. h. der "Dieselpest", erzielt. Mithin ist eine wiederholte Behandlung mit Bioziden, Enzymen oder anderen Mitteln erforderlich, was kostenintensiv und umweltbelastend ist. Hinsichtlich des Biozideinsatzes ist zudem besonders problematisch, dass es zu dauerhaften Resistenzen der Mikroorganismen gegenüber den eingesetzten Bioziden kommen kann. Außerdem verbleibt die tote Biomasse im Tank oder Lager, sodass bei starkem Befall auch nach zunächst erfolgreichem Einsatz von Bioziden eine gründliche Reinigung des Tanks oder Lagers notwendig ist, um ein Verstopfen der Filter und etwaige andere Schäden zu verhindern.

Zur Vermeidung von Rekontaminationen wird beispielsweise ein vollautomatisches Tankentwässerungssystem eingesetzt, welches eine regelmäßige Entwässerung ermöglicht. Dazu ist aber sowohl bei Lagertanks als auch bei Bunker- und Verbrauchertanks ein spezielles Tankdesign erforderlich. Weiterhin müssen Drainageleitungen am tiefsten Punkt angebracht sein. Von Nachteil ist dabei insbesondere, dass der Brenn-, Kraft oder Treibstoff beim Entleeren des jeweiligen Tanks bzw. beim Umpumpen unvermeidbar mit Wasser aus der Umgebungsluft kontaminiert wird. Zudem kommt es innerhalb des geschlossenen Tanks üblicherweise zur Bildung eines nicht vernachlässigbaren Volumens von Kondenswasser, sodass die Wasserkonzentration regelmäßig bestimmt und bei Bedarf wiederholt drainiert werden muss. Insgesamt ist dieses Verfahren technisch anspruchsvoll und somit kostenintensiv in der Planung und Durchführung. Aufgrund der Vollautomation ist das System kostenintensiv in der Anschaffung, störanfällig und damit wartungsintensiv.

Aufgabe der vorliegenden Erfindung ist es, die Nachteile des Standes der Technik zu überwinden und ein Mittel zur Verfügung zu stellen, mit welchem einfach, kostengünstig, effizient und nachhaltig mikrobieller Bewuchs in einem Lager für einen flüssigen Kohlenwasserstoff vermieden und/oder vernichtet werden kann. Das Mittel soll sowohl akut als auch präventiv einsetzbar sein. Es wird eine umweit- und ressourcenschonende Langzeitlösung zur Erhaltung der Qualität von zu lagernden oder gelagerten flüssigen Kohlenwasserstoffen angestrebt. Zudem soll ein Verfahren zur einfachen, kostengünstigen, effizienten und nachhaltigen Vermeidung und/oder Vernichtung von mikrobiellem Bewuchs in einem Lager für einen flüssigen Kohlenwasserstoff zur Verfügung gestellt werden. Dabei soll das Verfahren sowohl akut als auch präventiv einsetzbar sein und eine umweit- und ressourcenschonende Langzeitlösung zur Erhaltung der Qualität von zu lagernden oder gelagerten flüssigen Kohlenwasserstoffen ermöglichen. Außerdem soll ein Lager für einen flüssigen Kohlenwasserstoff bereitgestellt werden, mit dem eine Vermeidung und/oder Vernichtung von mikrobiellem Bewuchs einfach, kostengünstig, effizient, nachhaltig, umweit- und ressourcenschonend möglich ist.

Hauptmerkmale der Erfindung sind im kennzeichnenden Teil von Anspruch 1 und von Anspruch 7 angegeben. Ausgestaltungen sind Gegenstand der Ansprüche 2 bis 6.

Die Aufgabe wird gelöst durch ein Mittel zur Vermeidung und/oder Vernichtung von mikrobiellem Bewuchs in einem Lager für einen flüssigen Kohlenwasserstoff, wobei das Mittel ein Separationsmittel ist, mit welchem eine Grenzfläche zwischen einer Phase eines flüssigen Kohlenwasserstoffs und einer Phase von Wasser verringerbar ist, und wobei das Mittel eine Dichte aufweist, welche höher ist als die Dichte eines flüssigen Kohlenwasserstoffs und welche geringer ist als die Dichte von Wasser, wobei das Mittel ein antihaftendes Material aufweist, und wobei das Mittel ein Biozid und/oder ein Biostat aufweist. Das Mittel ist dadurch gekennzeichnet, dass das Biozid und/oder das Biostat mindestens eine Wirkstoffpartikel umfasst, die eine Ummantelung aufweist, wobei die Ummantelung eine Wasserlöslichkeit hat, die höher ist als die Wasserlöslichkeit der mindestens einen Wirkstoffpartikel.

Mit dem erfindungsgemäßen Mittel wird mikrobieller Bewuchs, insbesondere durch Bakterien, Pilzen, Hefen und Algen verursachter mikrobieller Bewuchs, in einem Lager für einen flüssigen Kohlenwasserstoff einfach, kostengünstig, effizient und nachhaltig vermieden und/oder vernichtet. Dabei kann die Vermehrung der Mikroorganismen auf einfache und kostengünstige Weise effizient und nachhaltig gehemmt werden und/oder Mikroorganismen können effizient abgetötet werden. Vorteilhafterweise ist das Mittel sowohl akut als auch präventiv einsetzbar. Mit dem Mittel wird eine umweit- und ressourcenschonende Langzeitlösung zur Erhaltung der Qualität des jeweiligen flüssigen Kohlenwasserstoffs, z. B. eines Brenn-, Kraft- oder Treibstoffs, zur Verfügung gestellt.

Weiterhin ist das Mittel einfach und sicher in der Handhabung und gewährleistet eine Langzeitwirkung. Auf eine arbeits- und damit kostenintensive Reinigung des Kohlenwasserstofflagers nach jeder Benutzung des Kohlenwasserstofflagers kann bei Verwendung des Mittels verzichtet werden, weil die Entstehung unerwünschter Biomasse von vorneherein deutlich reduziert bzw. gehemmt wird. Somit werden durch den akuten und/oder präventiven Einsatz des Mittels auch die Folgekosten für die Reinigung, Wartung und Reparatur des Kohlenwasserstofflagers reduziert.

Unter mikrobiellem Bewuchs wird erfindungsgemäß der durch Mikroorganismen verursachte Biomassezuwachs, insbesondere in Form von Bioschlamm, verstanden. Der durch die Vermehrung von Mikroorganismen, wie z. B. Bakterien, Hefen, Pilze und Algen, deren Größe auch außerhalb des Mikrometerbereichs liegen kann, in einem Lager für flüssigen Kohlenwasserstoff entstehende mikrobielle Bewuchs wird erfindungsgemäß - unabhängig vom flüssigen Kohlenwasserstoff - als "Dieselpest" bezeichnet.

Die Vermeidung und/oder Vernichtung von mikrobiellem Bewuchs kann die Hemmung der Vermehrung der in dem Kohlenwasserstofflager bereits vorhandenen Mikroorganismen und/oder deren Abtötung umfassen. Insgesamt wird somit eine hohe Qualität des jeweiligen Kohlenwasserstoffs gewährleistet. Bei dem Kohlenwasserstofflager kann es sich beispielsweise um ein Brenn-, Kraft- oder Treibstofflager handeln, insbesondere um ein stationäres oder um ein mobiles Lager für wenigstens einen flüssigen Kohlenwasserstoff. Beispielsweise kann das Kohlenwasserstofflager ein Raffinerielager, ein Tankschiff, ein Auto-, Flugzeug-, Boots- oder Schiffstank sein. Es kann auch eine Mischung verschiedener flüssiger Kohlenwasserstoffe vorliegen. Der Kohlenwasserstoff ist insbesondere ausgewählt aus einer Gruppe umfassend Diesel, Biodiesel, Heizöl, Benzin, Kerosin, Biokerosin und Naphta.

Das Mittel kann sich im Bereich der Grenzfläche zwischen der Kohlenwasserstoff- und der Wasserphase anordnen, sodass die Grenzfläche bzw. die Kontaktfläche zwischen den beiden Phasen verringert werden kann oder - je nach Ausgestaltung des Mittels - sogar ganz aufgehoben werden kann. Infolgedessen wird etwaigen Mikroorganismen die Lebensgrundlage entzogen, zumal Mikroorganismen den Kohlenwasserstoff als Nahrungs- bzw. Energielieferant und Wasser als Lebensraum benötigen. Als logische Konsequenz können bereits vorhandene Mikroorganismen abgetötet werden oder zumindest deren Vermehrung kann gehemmt werden. Dadurch werden die Produktion sowie der Zuwachs von Biomasse, insbesondere in Form von Stoffwechselprodukten der Mikroorganismen, verhindert oder zumindest stark gehemmt. Besonders vorteilhaft ist, dass sich das Mittel alleine aufgrund seiner zuvor anwendungsspezifisch festlegbaren Dichte, d. h. ohne weiteres Zutun, in dem Bereich anordnet, in welchem das Problem der mikroorganischen Belastung des Brennstoffs entsteht, nämlich im Bereich der Grenzfläche Kohlenwasserstoff/Wasser. Unter der Dichte des Mittels wird erfindungsgemäß dessen Gesamtdichte verstanden. Je nach Anwendungsfall, d. h. abhängig von dem im Kohlenwasserstofflager zu lagernden oder gelagerten Kohlenwasserstoff oder Kohlenwasserstoffgemisch, kann die Dichte des Mittels gezielt eingestellt werden kann. Aufgrund der individuellen Gestaltbarkeit des Mittels ist es vielfältig einsetzbar.

Das Mittel ist oder umfasst keine Substanz oder Substanzgemische, welche als Nahrungsquelle für die die "Dieselpest" verursachenden Mikroorganismen dienen können.

Das Mittel weist ein antihaftendes Material und ein Biozid und/oder ein Biostat auf.

Beispiele für ein antihaftendes Material sind Polytetrafluorethylen (PTFE, Teflon®) und Perfluoralkoxypolymere (PFA, Teflon® PFA). Je nach erforderlicher Dichte und Kostenaufwand wird das Mittel teilweise aus dem antihaftenden Material gefertigt sein oder beispielsweise lediglich dessen Oberfläche teilweise mit einem solchen Material beschichtet sein. Es kann sich beispielsweise um einen zentrosymmetrischen Voll- oder Hohlkörper mit zwei identischen Halbseiten handeln, wie z. B. eine Kugel, wobei nur die Oberfläche einer Halbseite das antihaftende Mittel aufweist. Das antihaftende Material bewirkt, dass das Mittel, welches aufgrund seiner Dichte im Bereich der Grenzfläche zwischen der Kohlenwasserstoff- und der Wasserphase angeordnet ist, zudem einen "Abperleffekt" aufweist. Dadurch wird der durch das Mittel erreichte Effekt - die Verringerung der Grenzfläche bzw. der Kontaktfläche zwischen den beiden Phasen - verstärkt. Denn die Mikroorganismen, welche sich bevorzugt in der Wasserphase aufhalten, werden - infolge des "Abperlens" von der Oberfläche des Mittels - noch stärker darin gehindert, an die für sie lebensnotwendigen Nährstoffe in der Kohlenwasserstoffphase zu gelangen.

Unabhängig davon, ob das Mittel aus dem antihaftenden Material teilweise besteht oder nur teilweise damit beschichtet ist, weist dessen Oberfläche ein Biozid und/oder ein Biostat auf.

Durch das Vorhandensein eines Biozids wird erzielt, dass an der Grenzfläche Wasser/Kohlenwasserstoff vorhandene Mikroorganismen, insbesondere Bakterien, Pilze, Hefen und Algen, abgetötet werden. In Gegenwart eines Biostats wird die Vermehrung derartiger Mikroorganismen gehemmt. Es gibt auch Biozide, welche zugleich als Biostate wirken, und umgekehrt.

Das Mittel ist ein Festkörper. Dabei ist der Festkörper bevorzugt als ein Schwimmkörper ausgestaltet, z. B. als Voll- oder Hohlkörper umfassend ein oder mehrere Materialien, der weder im flüssigen Kohlenwasserstoff noch in Wasser löslich ist. Um die Grenzfläche Kohlenwasserstoff/Wasser weitestgehend zu reduzieren, kann das Mittel beispielsweise eine gewisse Längs- oder Flächenausdehnung aufweisen. Alternativ oder ergänzend können mehrere Mittel zum Einsatz kommen. Je nach Anzahl und/oder Ausgestaltung des Schwimmkörpers kann eine vollständige Aufhebung der Grenzfläche Kohlenwasserstoff/Wasser erreicht werden. Weist das Mittel ein Biozid und/oder ein Biostat auf und ist der Wirkungsradius des Biozids und/oder des Biostats hinreichend definierbar und hinreichend groß, kann die Anzahl der für ein bestimmtes Kohlenwasserstofflager benötigten Festkörper zuvor berechnet werden. Die Festkörper werden dann in einem entsprechenden Abstand zueinander angeordnet, wobei stets darauf zu achten ist, dass eine hinreichende Verringerung der Grenzfläche Kohlenwasserstoff/Wasser erreicht wird. Eine definierte Beabstandung der Festkörper zueinander kann z. B. dadurch erreicht werden, dass die Festkörper in einem netzartigen Gerüst oder Gittererzeugnis umfassend Textil- oder Metallstränge in einem vorgebbaren Abstand zueinander angeordnet und lösbar fixiert sind. Alternativ können die Festkörper entlang wenigstens eines Textil- oder Metallstranges in einem vorgebbaren Abstand angeordnet und lösbar fixiert werden. Dadurch ist auch ein einfacher Austausch einzelner oder mehrerer Festkörper möglich. Insgesamt wird auf diese Weise eine Reduzierung der Kosten erzielt.

Es ist vorgesehen, dass das Biozid und/oder das Biostat kontrollierbar abgebbar ist. Das Biozid und/oder Biostat wird als Festkörper ausgebildeten Mittel kontinuierlich abgegeben werden. Die Mikroorganismen halten sich bevorzugt in der Wasserphase auf. Zumindest an der Grenzfläche zwischen der Wasserphase und der Flüssigkeitsphase bzw. der Oberfläche des Festkörpers sind die Mikroorganismen dem Biozid und/oder Biostat ausgesetzt. Dadurch können die Mikroorganismen abgetötet werden und/oder die Vermehrung der Mikroorganismen kann effizient und nachhaltig gehemmt werden. Die kontrollierbare Abgabe des Biozids und/oder des Biostats ist für eine Langzeitwirkung besonders vorteilhaft, insbesondere wenn das Biozid und/oder das Biostat relativ langsam und nach Bedarf abgegeben wird. Auf diese Weise können Resistenzen der Mikroorganismen gegenüber dem Wirkstoff des Biozids und/oder Biostats verhindert werden. Zudem können die benötigten Mengen an in der Regel teuren Bioziden und/oder Biostaten reduziert werden. Mithin wird eine unter ökonomischen und ökologischen Gesichtspunkten besonders vorteilhafte Lösung zur Verfügung gestellt. Eine kontrollierbare Abgabe ist dadurch erzielt werden, dass die Wirkstoffpartikel des Biozids und/oder des Biostats mit einer Ummantelung versehen sind, welche besser wasserlöslich ist als die Wirkstoffpartikel selbst. Alternativ oder ergänzend kann eine Mischung verschiedener Biozide und/oder Biostate eingesetzt werden, wobei diese unterschiedlich starke Wechselwirkungen mit dem Mittel zeigen.

In einer weiteren Ausführungsform des Mittels ist vorgesehen, dass das Biozid ein Mikrobizid ist und dass das Biostat ein Mikrobiostat ist. Mikrobizide sind Substanzen oder Substanzgemische, die Mikroorganismen abtöten. Je nach Anwendungsfall können Substanzen eingesetzt werden, die gezielt nur eine Sorte von Mikroorganismen abtöten, insbesondere Bakterien, Pilze, Hefen oder Algen. Diese Substanzen werden als Bakterizide, Fungizide - sowohl im Falle von Pilzen als auch von Hefen - und Algizide bezeichnet. Es können auch Mikrobizide verwendet werden, welche mikrobizid gegenüber mehr als einer Sorte von Mikroorganismen wirken. Durch Verwendung solcher Mikrobizide wird der Arbeitsaufwand verringert, weil dem jeweiligen Kohlenwasserstofflager nur ein Mikrobizid zugesetzt werden muss. Mikrobiostate sind Substanzen oder Substanzgemische, welche die Vermehrung von Mikroorganismen hemmen. Im Übrigen gilt das für die vorgesehenen Mikrobizide Gesagte analog für die vorgesehenen Mikrobiostate.

In einer weiteren Variante des Mittels ist vorgesehen, dass das Biozid und/oder das Biostat Silber und/oder ein Silbersalz enthält. Silber und Silbersalze wirken sowohl bakterizid als auch bakteriostatisch, was ihre Verwendung besonders effizient macht. Die bakteriziden und die bakteriostatischen Wirkeffekte sind sowohl im Falle von Silber in elementarer Form als auch im Falle von Silber in ionischer Form zufriedenstellend.

Das Biozid und/oder das Biostat liegt partikulär vor. Dadurch ist eine relativ große Oberfläche des Biozids und/oder des Biostats gewährleistet, was sich positiv auf die Effizienz des Mittels auswirkt. Das Biozid und/oder das Biostat kann insbesondere in Form von Nanopartikeln und/oder in Form von Nanofäden vorliegen. Dadurch wird die Oberfläche weiter vergrößert und die Effizienz des Mittels somit gesteigert. Die Nanofäden können beispielsweise als Einzelfäden und/oder als gitterförmige Ausbildung und/oder Filamente vorliegen. Die Partikel und Fäden können Durchmesser zwischen 10 nm und 2000 nm aufweisen, bevorzugt zwischen 100 nm und 1000 nm, besonders bevorzugt zwischen 150 nm und 500 nm, und ganz besonders bevorzugt zwischen 200 nm und 300 nm.

Die Aufgabe wird weiterhin gelöst durch ein Verfahren zur Vermeidung und/oder Vernichtung von mikrobiellem Bewuchs in einem Lager für einen flüssigen Kohlenwasserstoff, umfassend die folgenden Schritte:
- Einbringen des erfindungsgemäßen Mittels, und
- Verringerung einer Grenzfläche zwischen einer Phase des flüssigen Kohlenwasserstoffs und einer Wasserphase.

Das erfindungsgemäße Verfahren ist zur einfachen, kostengünstigen, effizienten und nachhaltigen Vermeidung und/oder Vernichtung von mikrobiellem Bewuchs in einem Lager für einen flüssigen Kohlenwasserstoff geeignet. Dabei kann das Kohlenwasserstofflager z. B. ein Brenn-, Kraft- oder Treibstofflager sein. Das Verfahren ist sowohl akut als auch präventiv einsetzbar und ermöglicht zudem eine umweit- und ressourcenschonende Langzeitlösung zur Erhaltung der Qualität von zu lagernden oder gelagerten Brenn-, Kraft- und Treibstoffen. Durch die Anordnung eines Mittels als Separationsmittel im Bereich der Grenzfläche Kohlenwasserstoff/Wasser wird eine Verringerung der Grenzfläche bzw. der Kontaktfläche zwischen den beiden Phasen erreicht. Dadurch wird den im Kohlenwasserstofflager vorhandenen Mikroorganismen die Lebensgrundlage entzogen, zumal Mikroorganismen den Kohlenwasserstoff als Nahrungs- bzw. Energielieferant und Wasser als Lebensraum benötigen. Als zwingende Konsequenz können die bereits vorhandenen Mikroorganismen abgetötet werden oder zumindest deren Vermehrung kann gehemmt werden.

Bei dem Verfahren weist das Mittel ein antihaftendes Material und/oder ein Biozid und/oder ein Biostat auf. Dabei ist es vorteilhaft, dass das Biozid und/oder das Biostat kontrollierbar abgebbar ist.

Spezielle Ausgestaltungsvarianten und die damit verbundenen Vorteile des Mittels, des Verfahrens und des Lagers für einen flüssigen Kohlenwasserstoff, welche jeweils im Zusammenhang mit einem der anderen genannten Erfindungsgegenstände beschrieben sind, gelten jeweils auch für den speziellen Textabschnitt.

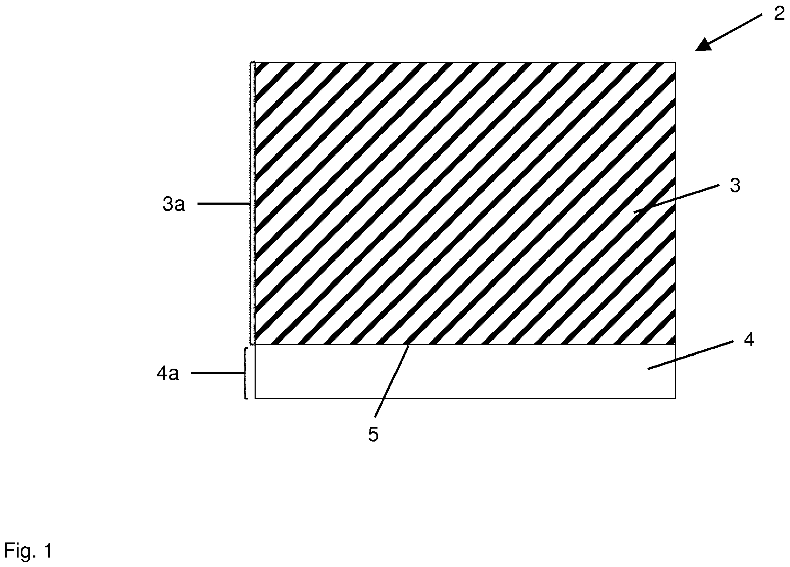

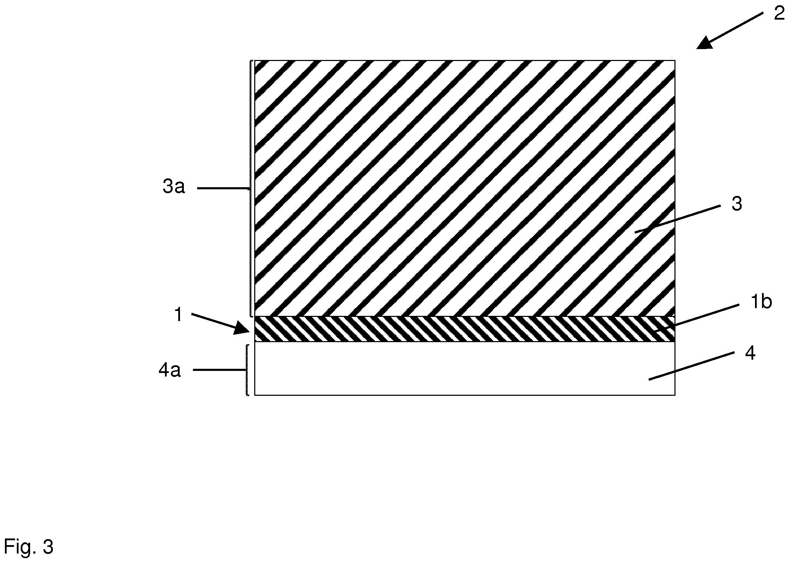

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Fig. 1 und Fig. 3 fallen nicht unter den Schutzumfang. Es zeigen:
- Fig. 1: Konventionelles Lager für einen flüssigen Kohlenwasserstoff,
- Fig. 2: Lager für einen flüssigen Kohlenwasserstoff, innerhalb dessen ein Mittel in Form mehrerer zueinander beabstandeter Festkörpers angeordnet ist, und
- Fig. 3: Lager für einen flüssigen Kohlenwasserstoff, innerhalb dessen ein Mittel in Form einer Flüssigkeit angeordnet ist.

In Fig. 1 ist ein konventionelles Kohlenwasserstofflager 2 gezeigt. Im oberen Bereich des herkömmlichen Kohlenwasserstofflagers 2 befindet sich eine Phase 3a eines flüssigen Kohlenwasserstoffs 3, welche über eine Grenzfläche 5 mit einer Wasserphase 4a in Kontakt steht. Der oder die Kohlenwasserstoffe 3 dienen als Substrate bzw. Nahrung für Mikroorganismen bzw. Mikroben, insbesondere für Bakterien, Hefen, Pilze und Algen. Das unvermeidbar im Brenn-, Kraft- oder Treibstoff vorhandene Wasser 4 stellt den Lebensraum der Mikroorganismen dar. Besonders problematisch ist, dass die Kontamination mit Wasser 4 innerhalb der gesamten Lieferkette von Raffinerie über Zwischenlager bis hin zum Fahrzeug- oder Heizöltank auftreten kann, z. B. beim Befüllen oder Belüften des Lagers oder Tanks. Der durch die Mikroorganismen verursachte Biomassezuwachs führt zu einer Vielzahl von Schäden, wie z. B. zu Filter- und Separationsproblemen, insbesondere zum Verstopfen von Filtern und damit einhergehenden Maschinenausfällen, Motorkorrosion, Lagerschäden, Schäden an Einspritzpumpen und -düsen bis hin zu deren Ausfall, geborstenen Metallteile, angefressenen Turbinenschlaufen und allgemeinen Korrosionserscheinungen. Die durch die Mikroorganismen verursachte mikrobielle Korrosion von Dieseltanks und die damit einhergehenden Funktionsstörungen von Dieselmotoren wird "Dieselpest" genannt.

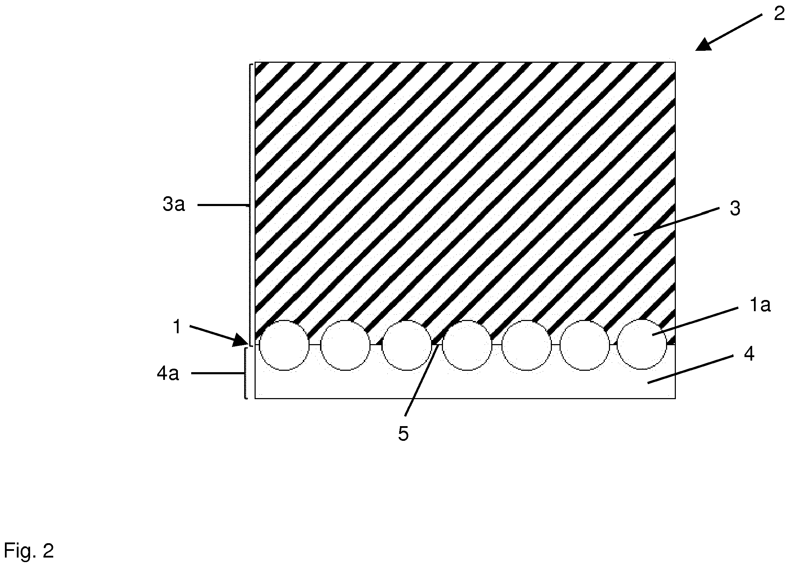

In Fig. 2 ist ein Kohlenwasserstofflager 2 gemäß einem Ausführungsbeispiel der vorliegenden Erfindung dargestellt. Dabei kann es sich um ein stationäres oder mobiles Lager 2 für eine Vielzahl unterschiedlicher flüssiger Kohlenwasserstoffe 3 handeln, welche im Raffinerie-, Schifffahrt-, Luftfahrt- und KFZ-Bereich verwendeten werden. Beispielsweise können darin Brenn-, Kraft- oder Treibstoffe gelagert und/oder transportiert werden, wie z. B. Diesel, Biodiesel, Heizöl, Benzin, Kerosin, Biokerosin und Naphta. Im Unterschied zu dem in Fig. 1 gezeigten Kohlenwasserstofflager zeichnet sich das Lager 2 dadurch aus, dass ein Mittel 1 in Form mehrerer zueinander beabstandeter Festkörper 1a im Bereich der Grenzfläche bzw. der Kontaktfläche 5 zwischen der Phase 3a des flüssigen Kohlenwasserstoffs 3 und der Wasserphase 4a angeordnet ist. Dabei ist vorteilhafterweise die Grenzfläche 5 verringert. Das Mittel 1 wirkt somit als Separationsmittel.

Mit dem in Fig. 2 dargestellten Kohlenwasserstofflager 2 wird eine Vermeidung und/oder Vernichtung von mikrobiellem Bewuchs, insbesondere in Gegenwart von Bakterien, Hefen, Pilzen und Algen, gewährleistet. Dabei kann die Vermeidung und/oder Vernichtung die Hemmung der Vermehrung bereits vorhandener Mikroorganismen und/oder deren Abtötung umfassen. Aufgrund der Anordnung der Festkörper 1a im Bereich der Grenzfläche zwischen der Kohlenwasserstoffphase 3a und der Wasserphase 4a wird die Grenzfläche 5 bzw. die Kontaktfläche zwischen den beiden Phasen 3a, 4a verringert oder-je nach Ausgestaltung der Festkörper 1a - sogar ganz aufgehoben. Infolgedessen wird den im Kohlenwasserstofflager 2 vorhandenen Mikroorganismen die Lebensgrundlage entzogen, zumal Mikroorganismen den Kohlenwasserstoff 3 als Nahrungs- bzw. Energielieferant und das Wasser 4 als Lebensraum benötigen. Als logische Konsequenz können die bereits vorhandenen Mikroorganismen abgetötet werden oder zumindest deren Vermehrung kann gehemmt werden.

Das Mittel 1 bzw. der Festkörper 1a anordnet sich alleine aufgrund seiner zuvor anwendungsspezifisch festlegbaren Dichte in dem Bereich, in welchem das Problem der mikroorganischen Belastung des Kohlenwasserstoffs 3 entsteht, nämlich im Bereich der Grenzfläche 5. Je nach Anwendungsfall, d. h. abhängig von dem im Kohlenwasserstofflager zu lagernden oder gelagerten Kohlenwasserstoff 3 oder Kohlenwasserstoffgemisch, kann die Dichte des Mittels gezielt eingestellt werden kann. Aufgrund der individuellen Gestaltbarkeit des Mittels 1 bzw. des Festkörpers 1a ist es vielfältig einsetzbar.

Der Festkörper 1a ist bevorzugt als ein Schwimmkörper ausgestaltet, z. B. als Voll- oder Hohlkörper umfassend ein oder mehrere Materialien, der weder im flüssigen Kohlenwasserstoff 3 noch im Wasser 4 löslich ist. Um die Grenzfläche 5 weitestgehend zu verringern, können - wie in Fig. 2 gezeigt - mehrere sphärische, zueinander beabstandete Festkörper 1a zum Einsatz kommen. Eine definierte Beabstandung der Festkörper 1a zueinander kann z. B. dadurch erreicht werden, dass die Festkörper 1a in einem netzartigen Gerüst oder Gittererzeugnis umfassend Textil- oder Metallstränge oder entlang wenigstens eines Textil- oder Metallstranges angeordnet und lösbar fixiert werden, wobei der Abstand der Festkörper 1a vorgebbar ist. Dadurch ist auch ein einfacher Austausch einzelner oder mehrerer Festkörper 1a möglich.

Alternativ oder ergänzend können ein oder mehrere Festkörper 1a mit einer gewissen Längs- oder Flächenausdehnung verwendet werden. Je nach Anzahl und/oder Ausgestaltung des Festkörpers 1a kann eine vollständige Aufhebung der Grenzfläche 5 erreicht werden.

Der Festkörper 1a weist ein Biozid und/oder ein Biostat auf, in Form einer Beschichtung. Wenn der Wirkungsradius des Biozids und/oder des Biostats hinreichend definierbar und hinreichend groß ist, kann die Anzahl der benötigten Festkörper 1a berechnet werden. Bei Verwendung mehrerer Festkörper 1a ist stets darauf zu achten, dass eine hinreichende Verringerung der Grenzfläche 5 erreicht wird.

Der Festkörper 1a weist ein antihaftendes Material auf, z. B. Polytetrafluorethylen (PTFE, Teflon®) oder ein Perfluoralkoxypolymer (PFA, Teflon® PFA). Der Festkörper 1a wird teilweise aus dem antihaftenden Material gefertigt sein. Es kann es sich beispielsweise um einen zentrosymmetrischen Voll- oder Hohlkörper mit zwei identischen Halbseiten handeln, wie z. B. eine Kugel, wobei nur die Oberfläche einer Halbseite das antihaftende Mittel aufweist. Das antihaftende Material bewirkt, dass der Festkörper 1a, welcher aufgrund seiner Dichte im Bereich der Grenzfläche 5 angeordnet ist, zudem einen "Abperleffekt" aufweist. Dadurch wird der durch den Festkörper 1a erreichte Effekt - die Verringerung der Grenzfläche bzw. der Kontaktfläche 5 - verstärkt. Denn die Mikroorganismen, welche sich bevorzugt in der Wasserphase 4a aufhalten, werden - infolge des "Abperlens" von der Oberfläche des Festkörpers 1a - noch stärker darin gehindert, an die für sie lebensnotwendigen Nährstoffe in der Kohlenwasserstoffphase 3a zu gelangen.

Durch das Vorhandensein eines Biozids können an der Grenzfläche 5 vorhandene Mikroorganismen abgetötet werden. In Gegenwart eines Biostats wird die Vermehrung derartiger Mikroorganismen gehemmt. Es gibt auch Biozide, die zugleich als Biostate wirken, und umgekehrt. Dabei ist es vorteilhaft, wenn die verschiedenen Biozide und/oder Biostate in unterschiedlich starker Wechselwirkung mit der Oberfläche des Festkörpers 1a stehen. Dann können die Biozide und/oder Biostate nacheinander über einen langen Zeitraum abgegeben werden. Dadurch kann die Langzeitwirkung verbessert werden. Alternativ kann die Oberfläche einer Ausführungsform des Festkörpers 1a, welche kein antihaftendes Material aufweist, mit einem Biozid und/oder einem Biostat beschichtet sein.

Wie in Fig. 3 gezeigt ist, kann als Mittel 1 anstatt eines Festkörpers 1a auch eine Flüssigkeit 1b eingesetzt werden. Die Flüssigkeit 1b zeigt bevorzugt keine oder nur eine sehr schlechte Mischbarkeit mit dem flüssigen Kohlenwasserstoff 3 und ist vorzugsweise nicht oder nur sehr schlecht mit dem Wasser 4 mischbar. Die Flüssigkeit 1b wirkt somit als Separationsmittel zwischen dem Wasser 4 und dem flüssigen Kohlenwasserstoff 3.

In einer Ausführungsform weist die Flüssigkeit 1b ein Biozid und/oder ein Biostat auf. Dabei sollte die Konzentration des Biozids und/oder des Biostats in der Flüssigkeit 1b so gewählt werden, dass eine effiziente Abtötung bereits vorhandener Mikroorganismen erfolgen kann und/oder zumindest eine Hemmung der Vermehrung der Mikroorganismen erzielt werden kann. Auf diese Weise wird eine Langzeitwirkung gewährleistet.

Alternativ kann die Flüssigkeit 1b selbst das Biozid und/oder das Biostat darstellen, wobei die Flüssigkeit 1b dann mit dem Kohlenwasserstoff 3 sowie mit Wasser 4 nicht mischbar oder nur schlecht mischbar sein sollte.

Unabhängig von der Art der gewählten Flüssigkeit 1b wird das Volumen der Flüssigkeit 1b im Verhältnis zu den bestimmbaren Volumina des Kohlenwasserstoffs 3 und des Wassers 4 bevorzugt so gewählt, dass sowohl zwischen der Flüssigkeit 1b und dem Kohlenwasserstoff 3 als auch zwischen der Flüssigkeit 1b und dem Wasser 4 eine Mischungslücke vorliegt. Auf diese Weise wird die Ausbildung einer homogenen Phase aus Kohlenwasserstoff 4 und Flüssigkeit 1b bzw. aus Wasser 4 und Flüssigkeit 1b verhindert und infolgedessen eine Trennung der Kohlenwasserstoffphase 3a und der Wasserphase 4a sichergestellt. Durch die Wahl der Schichtdicke der Phase der Flüssigkeit 1b kann eine Langzeitwirkung sichergestellt werden, weil je nach Schichtdicke ein Vorrat des Biozids und/oder des Biostats zur Verfügung gestellt wird. Je dicker die Schicht der Phase der Flüssigkeit 1b ist, umso größer ist der Abstand zwischen der Kohlenwasserstoffphase 3a und der Wasserphase 4a. Dann kann auch im Falle einer Erschütterung eine Durchmischung der beiden Phasen 3a, 4a weitestgehend ausgeschlossen werden kann.

Es ist auch möglich, sowohl einen Festkörper 1a als auch eine Flüssigkeit 1b als Mittel einzusetzen. Dabei können auch in einer Ausführungsform mehrere unterschiedliche Festkörper 1a und/oder mehrere unterschiedliche Flüssigkeiten 1b vorgesehen sein.

Ist ein Festkörper 1a und/oder eine Flüssigkeit 1b vorgesehen ist, welcher oder welches ein Biozid und/oder Biostat aufweist, so ist es vorteilhaft, wenn das Biozid und/oder das Biostat kontrollierbar abgebbar ist. Das Biozid und/oder Biostat kann in der Flüssigkeit 1b dispergiert oder gelöst sein. Zumindest an der Grenzfläche zwischen der Wasserphase 4a und der Phase der Flüssigkeit 1b bzw. der Oberfläche des Festkörpers 1a auf, sind die Mikroorganismen dem Biozid und/oder Biostat ausgesetzt. Dadurch können die Mikroorganismen abgetötet werden und/oder ihre Vermehrung kann gehemmt werden. Die kontrollierbare Abgabe des Biozids und/oder des Biostats ist für eine Langzeitwirkung besonders vorteilhaft, insbesondere wenn das Biozid und/oder das Biostat relativ langsam und nach Bedarf abgegeben wird. Auf diese Weise können Resistenzen der Mikroorganismen gegenüber dem Wirkstoff des Biozids und/oder Biostats verhindert werden. Zudem können die benötigten Mengen an in der Regel teuren Bioziden und/oder Biostaten reduziert werden. Mithin ist diese Ausführungsform des Kohlenwasserstofflagers 2 unter ökonomischen und ökologischen Gesichtspunkten besonders vorteilhaft. Eine kontrollierbare Abgabe kann beispielsweise dadurch erzielt werden, dass die Wirkstoffpartikel des Biozids und/oder des Biostats mit einer Ummantelung versehen sind, welche besser wasserlöslich ist als die Wirkstoffpartikel selbst. Alternativ oder ergänzend kann eine Mischung verschiedener Biozide und/oder Biostate eingesetzt werden, wobei diese unterschiedlich starke Wechselwirkungen mit dem Mittel 1 zeigen.

In einer weiteren Variante des in Fig. 2 gezeigten Kohlenwasserstofflagers 2 enthält das Biozid und/oder das Biostat Silber und/oder ein Silbersalz. Die Verwendung von Silber und/oder Silbersalzen ist besonders effizient, weil sie sowohl bakterizid als auch bakteriostatisch wirken. Die bakteriziden als auch die bakteriostatischen Wirkeffekte sind sowohl im Falle von Silber in elementarer Form als auch im Falle von Silber in ionischer Form zufriedenstellend.

Das Biozid und/oder das Biostat liegen partikulär vor. Dadurch ist eine relativ große Oberfläche des Biozids und/oder des Biostats gewährleistet, was sich positiv auf die Effizienz des Mittels 1 auswirkt. Bevorzugt werden Nanopartikel und/oder Nanofäden verwendet. Dadurch wird die Oberfläche weiter vergrößert und die Effizienz des Mittels 1 somit gesteigert. Die Nanofäden können z. B. als Einzelfäden und/oder als gitterförmige Ausbildung und/oder Filamente vorliegen. Die Partikel und Fäden können Durchmesser zwischen 10 nm und 2000 nm aufweisen, bevorzugt zwischen 100 nm und 1000 nm, besonders bevorzugt zwischen 150 nm und 500 nm, und ganz besonders bevorzugt zwischen 200 nm und 300 nm.

Insgesamt wird mit dem Kohlenwasserstofflager 2 mikrobieller Bewuchs, insbesondere in Gegenwart von Bakterien, Hefen, Pilzen und Algen, kostengünstig, effizient und nachhaltig vermieden. Es wird eine umweit- und ressourcenschonend Langzeitlösung zur Erhaltung der Qualität des jeweiligen flüssigen Kohlenwasserstoffs, insbesondere eines Brenn-, Kraft- oder Treibstoffs, zur Verfügung gestellt. Außerdem ist das Kohlenwasserstofflager 2 einfach und sicher in der Handhabung. Auf eine arbeits- und damit kostenintensive Reinigung des Kohlenwasserstofflagers 2 nach jeder Benutzung kann verzichtet werden, weil die Entstehung unerwünschter Biomasse durch die Gegenwart des Mittels 1 von vorneherein deutlich reduziert bzw. gehemmt wird. Mithin werden durch den akuten und/oder präventiven Einsatz des Mittels 1 auch die Folgekosten für die Reinigung, Wartung und Reparatur des Kohlenwasserstofflagers 2 reduziert.

### Bezugszeichenliste

- 1: Mittel
- 1a: Festkörper
- 1b: Flüssigkeit
- 2: Lager für einen flüssigen Kohlenwasserstoff/Kohlenwasserstofflager
- 3: flüssiger Kohlenwasserstoff
- 3a: Phase des flüssigen Kohlenwasserstoffs
- 4: Wasser
- 4a: Wasserphase
- 5: Grenzfläche

## Patentansprüche

1. Mittel zur Vermeidung und/oder Vernichtung von mikrobiellem Bewuchs in einem Lager (2) für einen flüssigen Kohlenwasserstoff (3),
- wobei das Mittel ein Separationsmittel ist, mit welchem eine Grenzfläche (5) zwischen einer Phase eines flüssigen Kohlenwasserstoffs (3) und einer Phase von Wasser (4) verringerbar ist,
- wobei das Mittel eine Dichte aufweist, welche höher ist als die Dichte des flüssigen Kohlenwasserstoffs (3) und welche geringer ist als die Dichte des Wassers (4),
- wobei das Mittel ein antihaftendes Material aufweist, und wobei
- das Mittel ein Biozid und/oder ein Biostat aufweist, **dadurch gekennzeichnet,**
- **dass** das Biozid und/oder das Biostat mindestens eine Wirkstoffpartikel umfasst, die eine Ummantelung aufweist, wobei die Ummantelung eine Wasserlöslichkeit hat, die höher ist als die Wasserlöslichkeit der mindestens einen Wirkstoffpartikel.

2. Mittel nach Anspruch 1, **dadurch gekennzeichnet, dass** das Mittel ein Festkörper (1a) und/oder eine Flüssigkeit (1b) ist.

3. Mittel nach Anspruch 1 oder 2, **dadurch gekennzeichnet, dass** das Biozid und/oder das Biostat kontrollierbar abgebbar ist.

4. Mittel nach einem der vorhergehenden Ansprüche, **dadurch gekennzeichnet, dass** das Biozid ein Mikrobiozid ist.

5. Mittel nach einem der vorhergehenden Ansprüche, **dadurch gekennzeichnet, dass** das Biozid und/oder das Biostat Silber und/oder ein Silbersalz enthält.

6. Mittel nach einem der vorhergehenden Ansprüche, **dadurch gekennzeichnet, dass** das Biozid und/oder das Biostat partikulär vorliegt.

7. Verfahren zur Vermeidung und/oder Vernichtung von mikrobiellem Bewuchs in einem Lager (2) für einen flüssigen Kohlenwasserstoff (3), umfassend die folgenden Schritte:
- Einbringen eines Mittels als Separationsmittel, welches eine höhere Dichte aufweist als ein flüssiger Kohlenwasserstoff (3), welches eine geringere Dichte aufweist als Wasser (4), und welches ein antihaftendes Material aufweist, wobei das Mittel ein Biozid und/oder ein Biostat aufweist und wobei das das Biozid und/oder das Biostat mindestens eine Wirkstoffpartikel umfasst, die eine Ummantelung aufweist, wobei die Ummantelung eine Wasserlöslichkeit hat, die höher ist als die Wasserlöslichkeit der mindestens einen Wirkstoffpartikel, und
- Verringerung einer Grenzfläche (5) zwischen einer Phase (3a) des flüssigen Kohlenwasserstoffs (3) und einer Wasserphase (4a).

## Claims

1. Agent for avoiding and/or destroying microbial growth in a store (2) for a liquid hydrocarbon (3),
- wherein the agent is a separating agent with which a phase interface (5) between a phase of a liquid hydrocarbon (3) and a phase of water (4) can be reduced,
- wherein the agent has a density which is higher than the density of the liquid hydrocarbon (3) and which is lower than the density of the water (4),
- wherein the agent has an anti-stick material, and wherein
- the agent has a biocide and/or a biostat, **characterised in**
- **that** the biocide and/or the biostat comprises at least one active substance particle which has a coating, wherein the coating has a solubility in water which is higher than the solubility in water of the at least one active substance particle.

2. Agent according to claim 1, **characterised in that** the agent is a solid (1a) and/or a liquid (1b).

3. Agent according to claim 1 or 2, **characterised in that** the biocide and/or the biostat can be dispensed in a controlled manner.

4. Agent according to any of the preceding claims, **characterised in that** the biocide is a microbiocide.

5. Agent according to any of the preceding claims, **characterised in that** the biocide and/or the biostat contains silver and/or a silver salt.

6. Agent according to any of the preceding claims, **characterised in that** the biocide and/or the biostat is present in a particulate form.

7. Method for avoiding and/or destroying microbial growth in a store (2) for a liquid hydrocarbon (3), comprising the following steps:
- introducing an agent as a separating agent which has a higher density than a liquid hydrocarbon (3), which has a lower density than water (4), and which has an anti-stick material, wherein the agent has a biocide and/or a biostat and wherein the biocide and/or the biostat comprises at least one active substance particle which has a coating, wherein the coating has a solubility in water which is higher than the solubility in water of the at least one active substance particle, and
- reducing a phase interface (5) between a phase (3a) of the liquid hydrocarbon (3) and a water phase (4a).

## Revendications

1. Moyen pour éviter et/ou détruire la couverture microbienne dans un lieu de stockage (2) pour un hydrocarbure liquide (3),
- dans lequel le moyen est un moyen de séparation, avec lequel une surface de délimitation (5) peut être réduite entre une phase d'un hydrocarbure liquide (3) et une phase d'eau (4),
- dans lequel le moyen présente une densité qui est supérieure à la densité de l'hydrocarbure liquide (3) et qui est inférieure à la densité de l'eau (4),
- dans lequel le moyen présente un matériau anti-adhérent, et dans lequel
- le moyen présente un biocide et/ou un biostat, **caractérisé en ce que**
- le biocide et/ou le biostat comprennent au moins une particule de substance active qui présente une enveloppe, dans lequel l'enveloppe a une solubilité dans l'eau qui est supérieure à la solubilité dans l'eau de l'au moins une particule de substance active.

2. Moyen selon la revendication 1, **caractérisé en ce que** le moyen est un corps solide (la) et/ou un liquide (1b).

3. Moyen selon la revendication 1 ou 2, **caractérisé en ce que** le biocide et/ou le biostat peuvent être délivrés de manière contrôlée.

4. Moyen selon l'une des revendications précédentes, **caractérisé en ce que** le biocide est un microbiocide.

5. Moyen selon l'une des revendications précédentes, **caractérisé en ce que** le biocide et/ou le biostat contiennent de l'argent et/ou un sel d'argent.

6. Moyen selon l'une des revendications précédentes, **caractérisé en ce que** le biocide et/ou le biostat sont présents sous une forme particulaire.

7. Procédé pour éviter et/ou détruire la couverture microbienne dans un lieu de stockage (2) pour un hydrocarbure liquide (3), comprenant les étapes suivantes :
- introduction d'un moyen en tant que moyen de séparation qui présente une densité supérieure à un hydrocarbure liquide (3) qui présente une densité inférieure à l'eau (4) et qui présente un matériau anti-adhérent, dans lequel le moyen présente un biocide et/ou un biostat et dans lequel le biocide et/ou le biostat comprennent au moins une particule de substance active qui présente une enveloppe, dans lequel l'enveloppe a une solubilité dans l'eau qui est supérieure à la solubilité dans l'eau de l'au moins une particule de substance active, et
- réduction d'une surface de délimitation (5) entre une phase (3a) de l'hydrocarbure liquide (3) et une phase aqueuse (4a).
